Europäisches Patentamt

European Patent Office

Office européen des brevets

(11) Veröffentlichungsnummer: **0 296 468**
**A2**

## EUROPÄISCHE PATENTANMELDUNG

(21) Anmeldenummer: 88109503.8

(22) Anmeldetag: 15.06.88

(51) Int. Cl.⁴: **B65D 1/02**

(30) Priorität: 20.06.87 DE 3720528

(43) Veröffentlichungstag der Anmeldung:
28.12.88 Patentblatt 88/52

(84) Benannte Vertragsstaaten:
AT BE CH ES FR GB IT LI NL

(71) Anmelder: **SCHOTT RUHRGLAS GMBH**
**Erich-Schott-Strasse**
**D-8596 Mitterteich(DE)**

(72) Erfinder: **Männl, Reinhard**
**Kohllohstrasse 41**
**D-8596 Mitterteich(DE)**

(74) Vertreter: **Schmitz, Waldemar, Dipl.-Phys.**
**Lessingstrasse 10**
**D-6200 Wiesbaden(DE)**

(54) Profiliertes Fläschchen aus Glas.

(57) Glasfläschchen mit einer Fläschchenwand, die aus einem Rohr mit einer im wesentlichen glatten Außenfläche und einer profilierten Innenfläche besteht.

EP 0 296 468 A2

## Die Erfindung betrifft ein neuartiges Glasfläschchen.

Am weitesten verbreitet sind die sogenannten Rohrfläschchen, die vor allem als Laborfläschchen oder als Medikamentenfläschchen Verwendung finden. Zu diesem Zweck werden diese Fläschchen aus glattem rundem Rohr hergestellt, das sowohl innen als auch außen einen kreisförmigen Querschnitt aufweist. Diese runden Glasrohre werden horizontal oder vertikal zu Fläschchen verarbeitet, wobei der Boden und die Mündung durch Erwärmung mit Brennern und mit Hilfe von Formwerkzeugen direkt vom laufenden Rohr hergestellt werden. Derartige Fläschchen sind mit allen denkbaren Mündungsformen versehen, wie Rollrand, Gewinde oder Schnappverschlußrand.

Nachteilig bei den bekannten Laborfläschchen ist, daß bei Mischvorgängen, bei denen die Flasche bewegt wird, nur eine schlechte Durchmischung der Substanzen erzielt wird. Auch für die Vermehrung von Zellkulturen sind diese Laborfläschchen ungeeignet.

Es gibt außerdem eine Vielzahl von Einsatzmöglichkeiten von Fläschchen, bei denen andere Fläschchenformen erwünscht oder notwendig sind. So werden beispielsweise von den Parfümherstellern Fläschchen verwendet, die eine möglichst originelle Gestalt aufweisen. Durch eine dekorative Gestaltung der Flaschen, wobei unter Umständen auch geschickt die Lichtbrechung ausgenutzt wird, soll das darin enthaltene Parfüm möglichst ansprechend dargeboten werden. Glatte Rohrfläschchen sind auf diesem Gebiet wenig gefragt.

Als Parfümfläschchen werden daher hauptsächlich sogenannte Hüttenfläschchen verwendet, die aus einem Glastropfen (Posten) durch z. B. Preßblasen in einer Form hergestellt werden.

Eine Preßblasmaschine besitzt mehrere Stationen, die mit artikelspezifischen Formen bestückt sind. Es ist auch eine Fertigung derartiger Fläschchen vom Glasband mit einer Rippenmaschine möglich, wobei ebenfalls Formen eingesetzt werden. Dies geschieht vollautomatisch direkt aus der Schmelzwanne.

Die verwendeten Formen besitzen eine Trennschicht zwischen Glas und Formmaterial und/oder werden zur Vermeidung von Fehlern geschmiert und unterliegen deshalb einem natürlichen Verschleiß, was die Herstellung dieser Hüttenfläschchen verteuert. Außerdem ist mit den teuren Preß-Blas-Formen eine wirtschaftliche Fertigung erst bei größeren Stückzahlen, d.h. mehr als 100 000 Fläschchen, sinnvoll. Bei Umstellungen, auch bezüglich der Glasart, fallen hohe Rüstkosten an. Die Herstellung von Mustern oder Prototypen ist wegen der notwendigen Formen sehr kostspielig. Durch die verfahrensbedingte Wanddicke, die höher liegt als bei Rohrfläschchen, haben die Hüttenfläschchen ein verhältnismäßig hohes Gewicht.

Ein weiterer Nachteil besteht darin, daß bei Hüttenfläschchen eine Profilierung nur bei der Außenfläche möglich ist. Eine Profilierung der Innenfläche ist, bei glatter Außenfläche, verfahrensbedingt unmöglich. Fläschchen mit profilierter Außenfläche haben jedoch den Nachteil, daß sie nicht so einfach bedruckt werden können wie Rohrfläschchen mit glatter Außenfläche. Schließlich fällt bei der Herstellung der Hüttenfläschchen relativ umso mehr Abfallglas an, je kleiner das Netto-Glasgewicht der Hüttenfläschchen ist.

Ziel der Erfindung ist daher ein Fläschchen aus Glas, das eine Außenfläche aufweist, die sich auf einfache Weise bedrucken läßt, und das Mischvorgänge begünstigt und nach der Befüllung optische Effekte zeigt, wobei das Gewicht und die Herstellungskosten gering sein sollen.

Dieses Ziel wird nach der Erfindung erreicht mit einem Glasfläschchen mit einer Fläschchenwand, wobei die Fläschchenwand aus einem Rohr besteht, das eine im wesentlichen glatte Außenfläche und eine ein Profil (nachfolgend Innenprofil genannt) aufweisende Innenfläche hat.

Mit einer im wesentlichen glatten Außenfläche ist eine Fläche gemeint, die sich auf einfache Weise bedrucken läßt, also eine Fläche, die entweder vollkommen glatt ist wie bei den bekannten Rohrfläschchen mit kreisförmigem Querschnitt oder die ein schwach ausgeprägtes Außenprofil aufweist, das nicht so stark strukturiert ist wie bei den Hüttenfläschchen.

Die Fläschchen werden aus entsprechend profiliertem Rohr hergestellt, wobei das Innenprofil vorzugsweise aus Rillen und/oder Stegen besteht, die sich in Richtung einer Längsachse des Fläschchens erstrecken. Die Fläschchen können mit geringen Kosten in Massenproduktion hergestellt werden, vorzugsweise durch Ziehen eines nahtlosen Rohrstranges, Unterteilen des Rohrstranges im Abschnitte und Weiterverarbeiten der Abschnitte zu den Fläschchen. Demgemäß ist das Rohr vorzugsweise ein nahtlos gezogenes Rohr. Das Profil kann im Querschnitt sternförmig oder wellenförmig gestaltet sein. Auch kann die Innenfläche der Fläschchenwand ein hinterschnittenes Profil aufweisen.

Das Innenprofil kann auch so ausgebildet sein, daß es im Querschnitt gesehen ein Polygon bildet, wobei vorzugsweise die Anzahl der Ecken des Polygons bei $n \geq 4$ liegt.

Für Parfümfläschchen ist ein Innenprofil, das im Querschnitt ein Polygon mit $n = 12$ Ecken bildet, besonders gut geeignet. Die Außenfläche kann im Querschnitt entweder kreisförmig sein oder ebenfalls ein Polygon mit n Ecken bilden.

Besonders vorteilhaft ist bei den erfindungsgemäßen Fläschchen, daß sich optische Effekte erzielen lassen, obwohl die Außenfläche glatt ist. Dies ist überall dort von Bedeutung, wo Wert auf eine representative Verpackung gelegt wird. Die Innenprofilierung trägt zu einer sichtbaren Wertsteigerung des Verpackungsmittels und des Produktes bei. Die Füllung ist deutlicher sichtbar. Die glatte Außenfläche läßt sich leicht reinigen und bedrucken. Je nach Befüllungsgrad ergeben sich zusätzliche optische Effekte. Dadurch, daß das Füllmedium an der profilierten Innenfläche anliegt, ergeben sich unterschiedliche Lichtbrechungen zum Füllmedium und zur Luft hin.

Eine Umstellung auf andere Glasarten ist mit geringen Kosten möglich, insbesondere ohne Austausch von Formen, so daß auch eine Verarbeitung für Kleinserien (kleiner als 100.000 Stück) bis zur Bemusterung kostengünstig möglich ist. Sämtliche Mündungsarten wie Rollrand, Gewinde, usw., die bei glatten Rohrfläschchen möglich sind, sind auch bei den erfindungsgemäßen Fläschchen herstellbar. Sogar kleinste Behältnisse mit geringem Glasgewicht, z.B. Probefläschchen für Parfüm, die erfindungsgemäß profiliert sind, können leicht gefertigt werden.

Besonders vorteilhaft ist, daß erfindungsgemäße Fläschchen auf herkömmlichen Fläschchenmaschinen verarbeitet werden können. Darüber hinaus zeichnen sich erfindungsgemäße Fläschchen gegenüber den herkömmlichen Hüttenfläschchen durch wesentlich geringeres Gewicht aus: Wanddicken um 1 mm und weniger sind möglich.

Bei erfindungsgemäßen Laborfläschchen wird durch die Innenprofilierung, insbesondere wenn sie scharfkantige Stege mit einem Eckenradius von bis zu 0,1 mm aufweist, die Mischwirkung verbessert, wenn das Fläschchen zu Mischzwecken bewegt wird. Außerdem begünstigt die größere innere Oberfläche Vorgänge wie Wärmeaustausch, Lichtabstrahlung, die Vermehrung von Zellkulturen oder die Aufheizung.

Die Erfindung ist weder auf die genannten Innenprofile noch auf die üblichen Größen von Laboroder Parfümfläschchen beschränkt. Die Dimensionen werden nur durch die verfügbaren Rohrdurchmesser beschränkt.

Nachfolgend werden beispielhafte Ausführungsformen der Erfindung anhand der Zeichnungen näher erläutert.

Es zeigen:

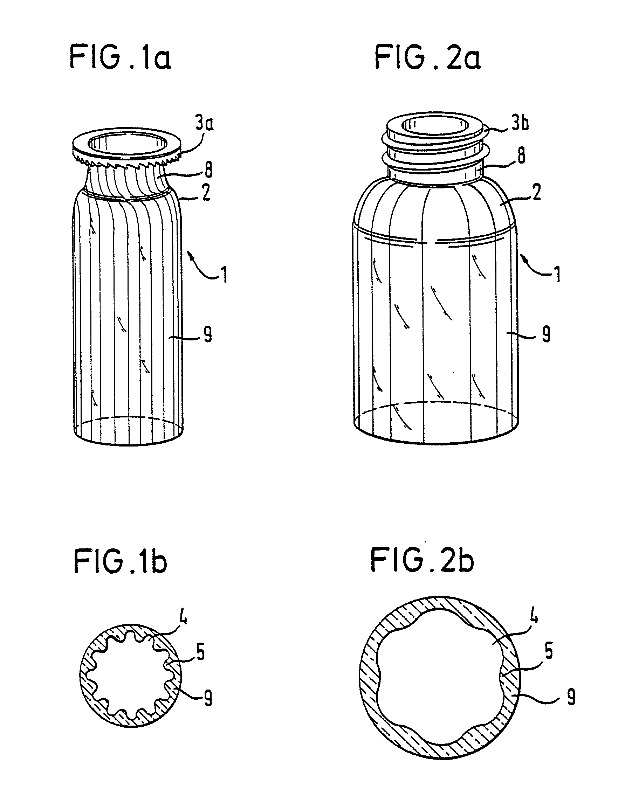

Figur 1 a eine schematische Ansicht eines Fläschchens mit Innenprofil;

Figur 1 b einen schematischen Querschnitt durch das Fläschchen gemäß Fig. 1a;

Figur 2 a eine schematische Ansicht eines Fläschchens gemäß einer anderen Ausführungsform;

Figur 2 b einen schematischen Querschnitt durch das Fläschchen gemäß Figur 2 a;

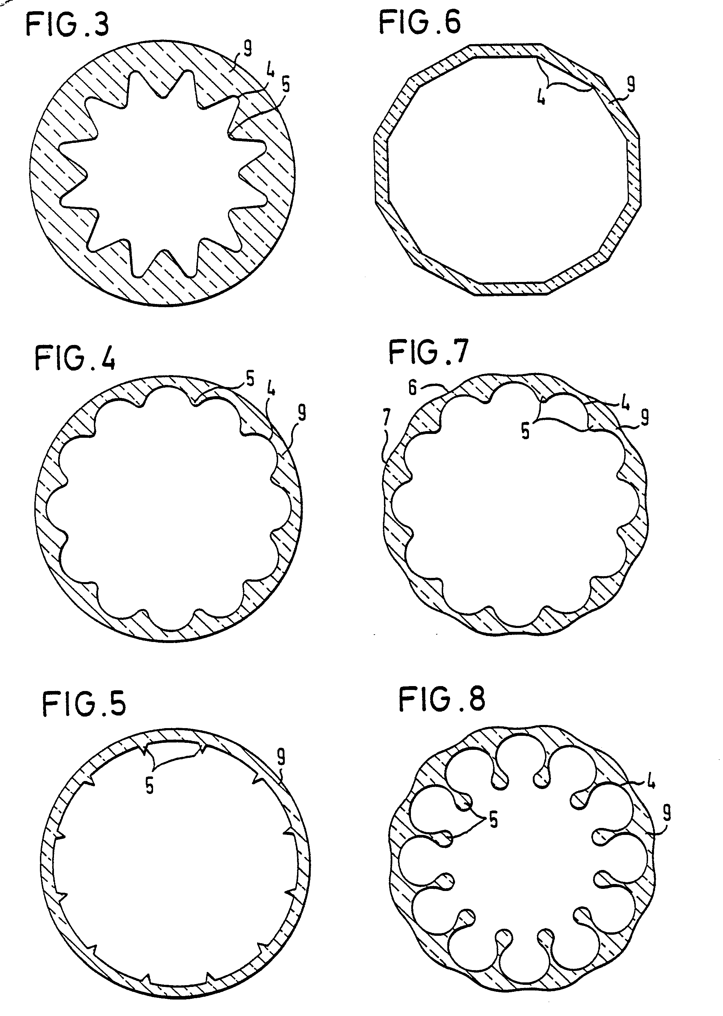

Figuren 3 bis 8 schematische Querschnitte weiterer Ausführungsformen.

In Figur 1a ist ein innenprofiliertes Fläschchen 1 dargestellt. In einem Übergangsbereich 2, wo sich der Querschnitt des Fläschchens von einer Fläschchenwand 9 zu einem Hals 8 hin verengt, ist das Profil schraubenförmig verdreht. Am Hals 8 ist ein Schnappverschlußrand 3a angeformt.

Das Innenprofil ist in Fig. 1b zu sehen. Das Innenprofil ist wellenförmig, d.h. die Stege 5 und Rillen 4, die sich in Richtung der Längsachse des Fläschchens erstrecken, sind im wesentlichen rund ausgebildet. Die Außenfläche ist glatt und hat einen kreisförmigen Querschnitt und ist somit zum Bedrucken gut geeignet.

Figur 2a zeigt ein Fläschchen 1 gemäß einer weiteren Ausführungsform. Am Flaschenhals 8 ist ein Gewinde 3b angeformt. Das Innenprofil (s. Fig. 2b) der Fläschchenwand 9 ist ebenfalls wellenförmig, allerdings sind die Stege 5 und Rillen 4 nur schwach ausgeprägt.

Die Figur 3 zeigt einen Querschnitt mit sternförmigem Innenprofil, bei dem die Stege 5 und Rillen 4 schärfer ausgeprägt sind. Insbesondere bei Laborfläschchen ist es zur Förderung von Mischungsvorgängen vorteilhaft, wenn die Kanten und Ecken des sternförmigen Profils möglichst scharf ausgebildet sind.

Figur 4 zeigt ein weiteres wellenförmiges Profil. Die Profile der Figuren 3 und 4 sind sowohl für Parfüm- als auch für Laborfläschchen geeignet.

Figur 5 zeigt ein Innenprofil, das nur aus scharfkantigen Stegen 5 besteht. Während dieses Fläschchenprofil vornehmlich für Laborfläschchen Verwendung findet, ist das in Fig. 6 gezeigte Profil mehr für Parfümfläschchen geeignet. Das Innenprofil ist derart ausgebildet, daß im Querschnitt die Rillen 4 die Ecken eines 12-eckigen Polygons bilden. Das Außenprofil ist in gleicher Weise gestaltet. In diesem Fall können die planen Außenflächen leicht bedruckt werden.

Das in Figur 7 gezeigte Innenprofil entspricht etwa dem der Figur 4. Zusätzlich ist die Außenfläche leicht gewellt. Rillen 6 und Stege 7 sind nur schwach ausgeprägt, so daß ein Bedrucken noch auf einfache herkömmliche Weise möglich ist.

Fig. 8 zeigt ein sogenanntes hinterschnittenes Profil, bei dem die Stege 5 zur Fläschchenmitte hin breiter werden. Ein derartiges Profil ist besonders für Laborfläschchen geeignet, die zur Vermehrung von Zellkulturen eingesetzt werden, da diese sich leicht in den stark ausgeprägten Rillen 4 einnisten können.

**Ansprüche**

1. Glasfläschchen mit einer Fläschchenwand, dadurch gekennzeichnet, daß die Fläschchenwand (9) aus einem Rohr besteht, das eine im wesentlichen glatte Außenfläche und eine ein Profil (Innenprofil) aufweisende Innenfläche hat.

2. Glasfläschchen nach Anspruch 1, dadurch gekennzeichnet, daß das Innenprofil aus Rillen (4) und/oder Stegen (5) besteht, die sich in Richtung einer Längsachse des Fläschchens erstrecken.

3. Glasfläschchen nach Anspruch 1 oder 2, dadurch gekennzeichnet, daß das Innenprofil ein im Querschnitt sternförmiges Profil ist.

4. Glasfläschchen nach Anspruch 1 oder 2, dadurch gekennzeichnet, daß das Innenprofil ein im Querschnitt wellenförmiges Profil ist.

5. Glasfläschchen nach Anspruch 1 oder 2, dadurch gekennzeichnet, daß das Innenprofil ein hinterschnittenes Profil ist.

6. Glasfläschchen nach Anspruch 1, dadurch gekennzeichnet, daß das Innenprofil im Querschnitt ein Polygon mit einer Anzahl $n \geq 4$ von Ecken ist.

7. Glasfläschchen nach Anspruch 6, dadurch gekennzeichnet, daß das Innenprofil im Querschnitt ein 12-eckiges Polygon ist.

8. Glasfläschchen nach einem der vorhergehenden Ansprüche, dadurch gekennzeichnet, daß das Rohr ein nahtlos gezogenes Rohr ist.

# FIG.1a

3a
8
2
1
9

# FIG.2a

3b
8
2
1
9

# FIG.1b

4
5
9

# FIG.2b

4
5
9

FIG.3

FIG.6

FIG.4

FIG.7

FIG.5

FIG.8